# EUROPÄISCHE PATENTANMELDUNG

(11) **EP 2 727 478 A2**
(43) Veröffentlichungstag der Anmeldung: **07.05.2014**
(21) Anmeldenummer: 13191121.6
(22) Anmeldetag: 31.10.2013
(51) Int. Cl.: A24C 5/32

(54) **Anordnung und Verfahren zum Überführen stabförmiger Artikel der Tabak verarbeitenden Industrie**

(30) Priorität: 01.11.2012 DE 102012110471
(71) Anmelder: HAUNI Maschinenbau AG, 21033 Hamburg (DE)
(72) Erfinder: Haul, Michael, 21529 Kröppelshagen (DE); Kluwe, Sven, 21493 Schwarzenbek (DE)
(74) Vertreter: Stork Bamberger

(57) **Zusammenfassung**

Die Erfindung betrifft eine Anordnung (10) zum Überführen stabförmiger Artikel der Tabak verarbeitenden Industrie, umfassend mindestens eine Sendereinheit (11) mit einer Steuereinrichtung (12) und mindestens einem Sendermodul (13) zum Senden der Artikel in Transportrichtung T, mindestens eine Empfängereinheit (14) mit einer Steuereinrichtung (15) und mindestens einem Empfängermodul (16) zum Empfangen der in Transportrichtung T gesendeten Artikel, mindestens eine jeweils ein Sendermodul (13) mit einem Empfängermodul (16) verbindende Rohrleitung (17) zum Überführen der stabförmigen Artikel von der Sendereinheit (11) an die Empfängereinheit (14), eine die Sendereinheit (11) mit der Empfängereinheit (14) verbindende Kommunikationsverbindung (18), Mittel (19) zum Erkennen und Anzeigen eines Rohrstaus innerhalb jeder Rohrleitung (17), sowie eine Ausblaseinheit (20) zum Ausblasen von den Rohrstau verursachenden Artikeln aus der oder jeder Rohrleitung (17) nach dem Unterbrechen des Betriebs der Sendereinheit (11), die sich dadurch auszeichnet, dass ein Steuermodul (21) vorgesehen ist, das zum automatischen Beheben eines Rohrstaus durch Ausblasen der Artikel aus jeder einen Rohrstau aufweisenden Rohrleitung (17) und automatischen Wiederaufnehmen des Betriebs der Sendereinheit (11) ausgebildet und eingerichtet ist. Des Weiteren betrifft die Erfindung ein entsprechendes Verfahren.

## Beschreibung

### Beschreibung

Die Erfindung betrifft eine Anordnung zum Überführen stabförmiger Artikel der Tabak verarbeitenden Industrie, umfassend mindestens eine Sendereinheit mit einer Steuereinrichtung und mindestens einem Sendermodul zum Senden der Artikel in Transportrichtung T, mindestens eine Empfängereinheit mit einer Steuereinrichtung und mindestens einem Empfängermodul zum Empfangen der in Transportrichtung T gesendeten Artikel, mindestens eine jeweils ein Sendermodul mit einem Empfängermodul verbindende Rohrleitung zum Überführen der stabförmigen Artikel von der Sendereinheit an die Empfängereinheit, eine die Sendereinheit mit der Empfängereinheit verbindende Kommunikationsverbindung, Mittel zum Erkennen und Anzeigen eines Rohrstaus innerhalb jeder Rohrleitung, sowie eine Ausblaseinheit zum Ausblasen von den Rohrstau verursachenden Artikeln aus der oder jeder Rohrleitung nach dem Unterbrechen des Betriebs der Sendereinheit.

Des Weiteren betrifft die Erfindung ein Verfahren zum Überführen stabförmiger Artikel der Tabak verarbeitenden Industrie, umfassend die Schritte: Senden der stabförmigen Artikel in Transportrichtung T mittels mindestens eines Sendermoduls mindestens einer Sendereinheit über mindestens eine Rohrleitung an mindestens ein Empfängermodul mindestens einer Empfängereinheit, Erkennen und Anzeigen eines Rohrstaus in der oder jeder Rohrleitung mittels eines Mittels zum Erkennen und Anzeigen eines Rohrstaus, und Unterbrechen des Betriebs der Sendereinheit und Ausblasen der den Rohrstau verursachenden Artikel aus der oder jeder Rohrleitung.

Solche Anordnungen und Verfahren kommen in der Tabak verarbeitenden Industrie zum Einsatz. Zigaretten und insbesondere Filterstäbe oder dergleichen werden aus unterschiedlichen Gründen in Behältern, den so genannten Schragen aufbewahrt. Zur Weiterverarbeitung müssen diese Artikel wieder in den Produktionsprozess eingeschleust bzw. an weiter verarbeitende Vorrichtungen bzw. Maschinen gesendet werden. Dabei ist es notwendig, die stabförmigen Artikel und insbesondere Filterstäbe schnell und zuverlässig über unterschiedliche Distanzen in ihrer Längserstreckung axial zu fördern. Der Sammelbegriff Filterstäbe umfasst einfache Acetat-Monofilterstäbe, Charcoal-Filterstäbe, Multisegmentfilterstäbe, Profilfilterstäbe, Kreppfilterstäbe sowie jede andere Form von Sonderfilterstäben. Zum axialen Fördern werden die Filterstäbe mittels einer Sendereinheit einer Ausblaszone zugeführt und über die Förderleitung an eine Empfängereinheit gesendet. Diese Förderleitung ist üblicherweise eine pneumatische Rohrleitung, in der die Artikel mit Druckluft transportiert werden, weshalb man auch davon spricht, dass die Artikel von der Sendereinheit an die Empfängereinheit geschossen werden. Beim Senden bzw. Schießen der Artikel durch die Rohrleitung besteht die Möglichkeit bzw. die Gefahr, dass innerhalb der Rohrleitung ein sich aus Artikeln bildender Rohrstau entsteht. Genauer handelt es sich um einen Artikelstau innerhalb der Rohrleitung, der sich bis zur Sendereinheit zurückstauen kann. Ein solcher Rohrstau kann z.B. durch defekte Artikel oder Verschmutzungen bzw. Ablagerungen innerhalb der Rohrleitungen entstehen und führt zum Stillstand der Anordnung, weshalb der Rohrstau behoben werden muss.

Es sind bisher Anordnungen mit den Merkmalen des Oberbegriffes des Anspruches 1 und Verfahren mit den Schritten des Oberbegriffes des Anspruches 9 bekannt, bei denen der Rohrstau erst erkannt wird, wenn die Sendereinheit wegen des Rückstaus der Artikel bis in die Sendereinheit hinein eine Störung anzeigt. Die Rohrstaubehebung muss bei diesen Anordnungen aufgrund der konstruktiven Ausbildung manuell erfolgen. Zur Behebung des Rohrstaus muss der Rohranschluss zwischen der Rohrleitung und dem Sendermodul manuell getrennt werden. Anschließend wird die Ausblaseinheit mittels eines Tasters von einer Bedienperson aktiviert, so dass die Artikel aus der Rohrleitung ausgeblasen werden. Zusätzlich muss die Sendereinheit selbst auch noch manuell gereinigt werden. Erst dann kann die Verbindung zwischen der Sendereinheit und der Rohrleitung wieder manuell herstellt werden, um den Betrieb der Anordnung wieder aufzunehmen. Die bekannten Anordnungen und Verfahren weisen daher den Nachteil auf, dass sich aufgrund der späten Störungsmeldung bereits sehr viele Artikel im System, also in der Rohrleitung und auch in der Sendereinheit, befinden, was eine umfassende, manuelle Reinigung erfordert. Dies ist zum einen zeitintensiv und zum anderen arbeitsaufwendig. Diese negativen Aspekte führen zu einer Reduzierung der Verfügbarkeit der Sendereinheit.

Der Erfindung liegt demnach die Aufgabe zugrunde, eine Anordnung zu schaffen, die eine verbesserte Verfügbarkeit der Sendereinheit gewährleistet. Die Aufgabe besteht auch darin, ein entsprechendes Verfahren vorzuschlagen.

Diese Aufgabe wird durch eine Anordnung mit den eingangs genannten Merkmalen dadurch gelöst, dass ein Steuermodul vorgesehen ist, das zum automatischen Beheben eines Rohrstaus durch Ausblasen der Artikel aus jeder einen Rohrstau aufweisenden Rohrleitung und automatischen Wiederaufnehmen des Betriebs der Sendereinheit ausgebildet und eingerichtet ist. Mit anderen Worten ist das Steuermodul derart programmiert, dass auf das Signal des Mittels zum Anzeigen und Erkennen eines Rohrstaus hin eine automatische Rohrleitungsreinigung gestartet werden kann, die ohne Eingriff einer Bedienperson, also vollautomatisch ausführbar ist. Mittels des erfindungsgemäßen Steuermoduls können die zur automatischen Rohrstaubehebung notwendigen Signale, Informationen und Steuerbefehle über die bestehende Kommunikationsverbindung bidirektional übertragen werden, wodurch die Erkennung der Störung frühzeitig erfolgt. Insgesamt ist der Reinigungsaufwand reduziert, was zu einer Steigerung der Verfügbarkeit der Anordnung und insbesondere der Sendereinheit führt.

Zweckmäßigerweise ist das Steuermodul der Steuereinrichtung der Sendereinheit zugeordnet und die Anordnung umfasst im Förderweg der stabförmigen Artikel von der Sendereinheit zur Empfängereinheit eine Rückblaseinheit als Ausblaseinheit zum Ausblasen der Artikel entgegen der Transportrichtung T, die in Transportrichtung T der Artikel hinter der oder jeder Rohrleitung und vor der Empfängereinheit angeordnet ist, und eine Ausschleuseeinheit zum Ausschleusen der Artikel entgegen der Transportrichtung T, die in Transportrichtung T der Artikel hinter der Sendereinheit und vor der oder jeder Rohrleitung angeordnet ist, wobei die Rückblaseinheit und die Ausschleuseeinheit über mindestens eine Kommunikationsverbindung mit dem Steuermodul verbunden sind. Durch die Zuordnung des Steuermoduls in die Sendereinheit sind sämtliche Funktionen der Anordnung ausgehend von der Sendereinheit über die oder jede Rohrleitung bis hin zur Rückblaseinheit sendergesteuert, was eine schnelle Erkennung und Behebung eines Rohrstaus unterstützt. Wie erwähnt, befinden sich die Ausschleuseeinheit und die Rückblaseinheit im Förderweg der stabförmigen Artikel. Das bedeutet, dass die Artikel - im normalen Senderbetrieb - ausgehend von der Sendereinheit durch die Ausschleuseeinheit, die oder jede Rohrleitung und durch die Rückblaseinheit bis in die Empfängereinheit geschossen werden. Mit dem Begriff "mindestens" eine Kommunikationsverbindung wird ausgedrückt, dass eine gemeinsame Kommunikationsverbindung zwischen Steuermodul einerseits und Rückblaseinheit und Ausschleuseeinheit andererseits vorgesehen sein kann oder diese Verbindungen jeweils über eigene Kommunikationsverbindungen hergestellt sein können.

Eine besonders bevorzugte Ausführungsform ist dadurch gekennzeichnet, dass das Steuermodul zum automatischen Beheben eines Rohrstaus mit den Steuereinrichtungen der Sendereinheit und der Empfängereinheit der Anordnung in Kommunikationsverbindung steht. Dadurch ist ein zügiger und effektiver Signalaustausch zum Steuern der Anordnung gewährleistet.

Vorteilhafterweise sind sowohl im Bereich der Sendereinheit als auch im Bereich der Empfängereinheit Messmittel zum Zählen der von der Sendereinheit abgeschossenen bzw. von der Empfängereinheit empfangenen Artikel angeordnet. Dadurch kann mittels des Steuermoduls eine Differenzbildung zur Ermittlung des Befüllungsgrades jeder Rohrleitung erfolgen. Durch die Differenzbildung ist die Anzahl der Artikel in der Rohrleitung bekannt. In Verbindung mit der Länge der stabförmigen Artikel und der Länge der Rohrleitung kann der Befüllungsgrad ermittelt werden. Ändert sich der Befüllungsgrad gegenüber einem zuvor als Standard-Befüllungsgrad definierten Befüllungsgrad bzw. steigt der Befüllungsgrad gegenüber dem Standard-Befüllungsgrad an, ist dies ein Indikator für das Entstehen bzw. Vorhandensein eines Rohrstaus. Diese erfindungsgemäße Ausführungsform verbessert und vereinfacht somit die Erkennung eines Rohrstaus.

Eine besonders bevorzugte Ausbildung der Erfindung zeichnet sich dadurch aus, dass jede Rohrleitung eingangsseitig und ausgangsseitig schaltbare Entlüftungsmittel aufweist. Jede Rohrleitung verfügt somit über eine Anfangsentlüftung am Rohrleitungsanfang und eine Endentlüftung am Rohrleitungsende. Dadurch, dass diese Entlüftungsmittel schaltbar ausgebildet sind, kann das Beheben des Rohrstaus durch die Inbetriebnahme der Rückblaseinheit besonders effizient und schnell ausgeführt werden.

Zweckmäßigerweise ist das Steuermodul zum automatischen Beheben eines Rohrstaus ein in die Steuereinrichtung der Sendereinheit integrierter Programmbaustein zum automatischen Steuern der Entlüftungsmittel sowie der Rückblaseinheit und der Ausschleuseeinheit in Abhängigkeit des jeweiligen Befüllungsgrads und/oder Druckniveaus jeder Rohrleitung. Diese erfindungsgemäße Ausbildung stellt einen koordinierten Ablauf der automatischen Rohrstaubehebung sicher.

Vorteilhafterweise sind die Entlüftungsmittel in Transportrichtung T der Artikel an jeder Rohrleitung eingangsseitig hinter der Ausschleuseeinheit und ausgangsseitig vor der Rückblaseinheit angeordnet, was den optimierten Ablauf der Rohrstaubehebung unterstützt.

Eine vorteilhafte Weiterbildung der Erfindung ist dadurch gekennzeichnet, dass die Messmittel als Lichtschranke ausgebildet sind. Diese Ausbildung bietet eine besonders einfache und günstige Möglichkeit der Erfassung der Anzahl der Artikel zur Differenzbildung.

Die Aufgabe wird auch durch ein Verfahren mit den eingangs genannten Schritten dadurch gelöst, dass das Ausblasen der den Rohrstau verursachenden Artikel mittels eines Steuermoduls automatisch erfolgt, und der Betrieb der Sendereinheit nach dem vollständigen Ausblasen aller den Rohrstau verursachender Artikel aus der oder jeder Rohrleitung mittels des Steuermoduls automatisch wieder aufgenommen wird. Die sich daraus ergebenden Vorteile wurden bereits im Zusammenhang mit der Anordnung beschrieben, weshalb zur Vermeidung von Wiederholungen auf die entsprechenden Passagen verwiesen wird.

Das Verfahren zeichnet sich weiterhin dadurch aus, dass mittels des Steuermoduls ein Rohrstau anhand des Befüllungsgrads jeder Rohrleitung über eine Differenzbildung zwischen der Anzahl der von der Sendereinheit abgeschossenen Artikeln und der Anzahl der von der Empfängereinheit empfangenen Artikeln und/oder über eine Druckerhöhung innerhalb der oder jeder Rohrleitung ermittelt, angezeigt und zur Steuerung einer Rückblaseinheit und einer Ausschleuseeinheit verwendet wird. Als Befüllungsgrad wird die Füllung der Rohrleitung mit stabförmigen Artikeln bezeichnet. Im Normalzustand des Senderbetriebs stellt sich insbesondere in Abhängigkeit der Länge der Rohrleitung, der Leistung der Sendereinheit, der Höhe des Drucks, mit der die Artikel geschossen werden, und dem Typ der stabförmigen Artikel ein gleichbleibender, konstanter Befüllungsgrad, der so genannte Standard-Befüllungsgrad ein. Durch die Differenzbildung lässt sich der aktuelle Befüllungsgrad jeder Rohrleitung ermitteln. Durch die Ermittlung des Befüllungsgrades lässt sich ein Rohrstau, der im hinteren Bereich der Rohrleitung, also in der Nähe der Empfängereinheit, entsteht, besonders einfach und sicher erkennen, da im Bereich der Empfängereinheit keine Artikel mehr gezählt werden, während die Sendereinheit noch Artikel sendet. Mittels der Drucküberwachung kann ein Rohrstau, der im vorderen Bereich der Rohrleitung, also in der Nähe der Sendereinheit, entsteht, besonders einfach und sicher erkannt werden, da sich die Artikel bis zurück zur Sendereinheit stauen, bevor sich der Befüllungsgrad ändert. Dieser Rückstau im vorderen Bereich der Rohrleitung führt zu einem Druckanstieg innerhalb der Rohrleitung. Beispielsweise kann der Druckanstieg über einen Drucksensor oder dergleichen, der bevorzugt innerhalb des Sendermoduls angeordnet ist, ermittelt werden.

Vorteilhafterweise werden die Ausschleuseeinheit, die zwischen der Sendereinheit und der oder jeder Rohrleitung angeordnet ist, zum Beheben des Rohrstaus aus einer Normalstellung in eine Ausschleusestellung, und die Rückblaseinheit, die zwischen der oder jeder Rohrleitung und der Empfängereinheit angeordnet ist, aus einer Durchgangstellung in einen Betriebszustand geschaltet, so dass die stabförmigen Artikel entgegen der Transportrichtung T über die Ausschleuseeinheit aus der oder jeder Rohrleitung ausgeblasen werden. Mit der Normalstellung wird die Stellung bezeichnet, in der die Artikel entlang des Förderwegs in Transportrichtung T durch die Ausschleuseeinheit gefördert werden können. Die Ausschleusestellung unterbricht den Förderweg derart, dass die entgegen der Transportrichtung T geblasenen Artikel im Wege einer Weiche aus der Rohrleitung ausgeschleust werden. Durchgangsstellung bedeutet in diesem Zusammenhang, dass die Rückblaseinheit Bestandteil des Förderweges der Artikel in Transportrichtung T ist und den Durchgang der Artikel aus der Rohrleitung in die Empfängereinheit gewährleistet. Der Betriebszustand ist erreicht, wenn der Durchgang gesperrt ist und die Blasluft zum Ausblasen der Artikel entgegen der Transportrichtung T anliegt.

Ein bevorzugtes Verfahrensprinzip zeichnet sich dadurch aus, dass nach dem Unterbrechen des Betriebs der Sendereinheit Entlüftungsmittel, die an jeder Rohrleitung eingangsseitig und ausgangsseitig angeordnet sind, aus einer offenen Betriebsstellung in eine geschlossene Sperrstellung und nach dem vollständigen Ausblasen der Artikel und vor Inbetriebnahme der Sendereinheit wieder zurück in die ursprüngliche Betriebsstellung geschaltet werden. Dadurch wird die sichere und schnelle Rohrstaubehebung unterstützt.

Weitere zweckmäßige und/oder bevorzugte Merkmale und Weiterbildungen der Anordnung sowie vorteilhafte Verfahrensschritte ergeben sich aus den Unteransprüchen und der Beschreibung. Eine besonders bevorzugte Anordnung sowie das Verfahrensprinzip werden anhand der beigefügten Zeichnung näher erläutert. In der Zeichnung zeigt:
- Fig. 1: eine schematische Darstellung einer bevorzugten Ausführungsform einer Anordnung zum Überführen stabförmiger Artikel der Tabak verarbeitenden Industrie,
- Fig. 2: ein Ablaufdiagramm, das schematisch den gesamten Vorgang bzw. Ablauf der Rohrstaubehebung darstellt,

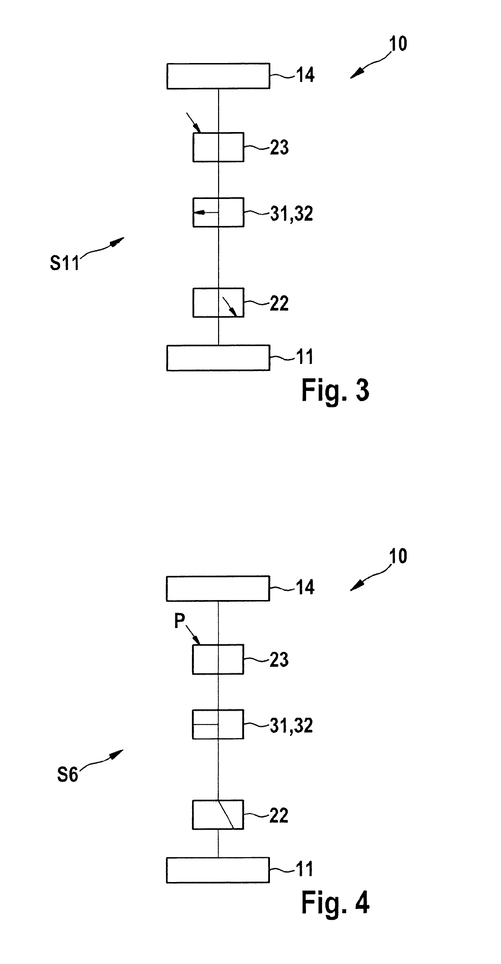

- Fig. 3: eine vereinfachte Darstellung der Anordnung im Senderbetrieb als Ablaufdiagramm, und
- Fig. 4: eine vereinfachte Darstellung der Anordnung gemäß Figur 3 im Betrieb der Rohrstaubehebung.

Die in der Zeichnung dargestellte Ausführungsform sowie das Verfahren dienen zum Überführen von Filterstäben mittels Druckluft von einer Sendereinheit an eine Empfängereinheit. Die Erfindung betrifft jedoch in gleicher Weise auch Anordnungen und Verfahren zum Überführen aller anderen stabförmigen Artikel der Tabak verarbeitenden Industrie, die Filter- und/oder Tabakmaterial enthalten.

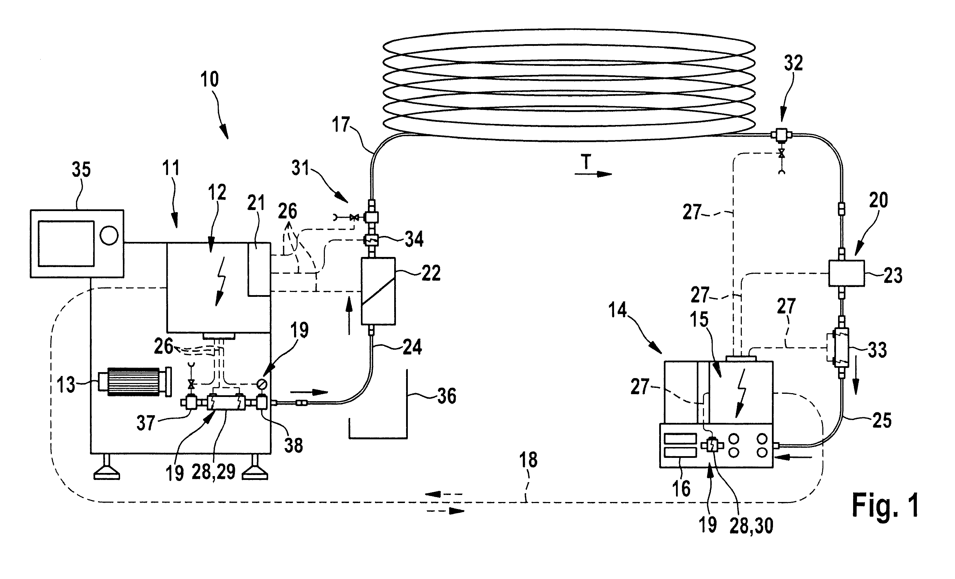

Anhand der Figur 1 ist eine Anordnung 10 dargestellt, die mindestens eine Sendereinheit 11 mit einer Steuereinrichtung 12 und mindestens einem Sendermodul 13 zum Senden der Artikel in Transportrichtung T, mindestens eine Empfängereinheit 14 mit einer Steuereinrichtung 15 und mindestens einem Empfängermodul 16 zum Empfangen der in Transportrichtung T gesendeten Artikel, mindestens eine jeweils ein Sendermodul 13 mit einem Empfängermodul 16 verbindende Rohrleitung 17 zum Überführen der stabförmigen Artikel von der Sendereinheit 11 an die Empfängereinheit 14, eine die Sendereinheit 11 mit der Empfängereinheit 14 verbindende Kommunikationsverbindung 18, Mittel 19 zum Erkennen und Anzeigen eines Rohrstaus innerhalb jeder Rohrleitung 17, sowie eine Ausblaseinheit 20 zum Ausblasen von den Rohrstau verursachenden Artikeln aus der Rohrleitung 17 nach dem Unterbrechen des Betriebs der Sendereinheit 11 umfasst. Solche Anordnungen 10 sind an ein nicht dargestelltes Druckluftsystem angeschlossen, um den für das Senden bzw. Schießen der Artikel erforderlichen Druck innerhalb der oder jeder Rohrleitung 17 aufzubringen. Alternativ zu der gezeigten Ausführungsform kann die Anordnung 10 auch mehrere Sendereinheiten 11 mit jeweils mehr als einem Sendermodul 13 und/oder mehrere Empfängereinheiten 14 mit jeweils mehr als einem Empfängermodul 16 aufweisen. Entsprechend sind dann für die letztgenannten Ausführungsformen auch mehrere Rohrleitungen 17 vorgesehen. Die Steuereinrichtung 12 für die Sendereinheit 11 und die Steuereinrichtung 15 für die Empfängereinheit 14 sind als einfacher Schaltschrank integral zu der jeweiligen Einheit dargestellt und können auch separat oder als gemeinsame Steuerung ausgebildet und eingerichtet sein.

Eine solche Anordnung 10 zeichnet sich erfindungsgemäß dadurch aus, dass ein Steuermodul 21 vorgesehen ist, das zum automatischen Beheben eines Rohrstaus durch Ausblasen der Artikel aus jeder einen Rohrstau aufweisenden Rohrleitung 17 und automatischen Wiederaufnehmen des Betriebs der Sendereinheit 11 ausgebildet und eingerichtet ist.

Die im Folgenden beschriebenen Merkmale und Weiterbildungen stellen für sich betrachtet oder in Kombination miteinander bevorzugte Ausführungsformen der Erfindung dar. Es wird ausdrücklich darauf hingewiesen, dass Merkmale, die in den Ansprüchen zusammengefasst sind, auch eigenständig die weiter oben beschriebene Anordnung 10 sowie das Verfahren weiterbilden können.

Das erfindungsgemäße Steuermodul 21 ist der Steuereinrichtung 12 der Sendereinheit 11 zugeordnet, so dass die Anordnung 10 zumindest ausgehend von der Sendereinheit 11 bis zum Eingang der Empfängereinheit 14 komplett sendergesteuert ist. Die Anordnung 10 umfasst weiterhin eine Ausschleuseeinheit 22 und eine Rückblaseinheit 23 als Ausblaseinheit 20. Die Ausschleuseeinheit 22 zum Ausschleusen der Artikel entgegen der Transportrichtung T ist in Transportrichtung T der Artikel hinter der Sendereinheit 11 und vor der oder jeder Rohrleitung 17 angeordnet. Die Rückblaseinheit 23 zum Ausblasen der Artikel entgegen der Transportrichtung T ist in Transportrichtung T der Artikel hinter der oder jeder Rohrleitung 17 und vor der Empfängereinheit 14 angeordnet. Zur Bildung eines durchgängigen Förderwegs für die Artikel von der Sendereinheit 11 bis zur Empfängereinheit 14 weist die Sendereinheit 11 ausgangsseitig einen Rohranschluss 24 auf, der an die Ausschleuseeinheit 22 angeschlossen ist. An die Ausschleuseeinheit 22 ist ausgangsseitig die oder jede Rohrleitung 17 angeschlossen, deren Länge variieren kann. Das Ende der Rohrleitung 17 ist eingangsseitig an die Rückblaseinheit 23 angeschlossen. Ein so genannter Einlaufbogen 25 verbindet die Rückblaseinheit 23 ausgangsseitig mit der Empfängereinheit 14. Mit anderen Worten liegen sowohl die Ausschleuseeinheit 22 als auch die Rückblaseinheit - im Senderbetrieb - im Förderweg der stabförmigen Artikel. Die Ausschleuseeinheit 22 und die Rückblaseinheit 23 sind über eine weiter unten beschriebene Kommunikationsverbindung direkt oder indirekt mit dem Steuermodul 21 verbunden. Es ist eine gemeinsame Kommunikationsverbindung möglich. Es besteht aber auch die Möglichkeit, dass mehrere separate Kommunikationsverbindungen vorgesehen sind.

Das Steuermodul 21 zum automatischen Beheben eines Rohrstaus steht mit den Steuereinrichtungen 12, 15 der Sendereinheit 11 bzw. Empfängereinheit 14 der Anordnung 10 in Kommunikationsverbindung. Diese kann durch die Kommunikationsverbindung 18 und/oder Steuerleitungen 26, 27 oder andere optische, drahtgebundene oder drahtlose Daten-, Signal- oder Verbindungsleitungen hergestellt sein. Entsprechende Verbindungen bestehen auch zwischen dem Steuermodul 21 und den steuerbaren Komponenten der Anordnung 10, wie z.B. der Ausschleuseeinheit 22, der Rückblaseinheit 23 etc. Auch hier besteht die Möglichkeit, dass die Verbindungen durch eine gemeinsame Kommunikationsverbindung oder separate Kommunikationsverbindungen hergestellt sind.

Optional sind sowohl im Bereich der Sendereinheit 11 als auch im Bereich der Empfängereinheit 14 Messmittel 28 zum Zählen der von der Sendereinheit 11 abgeschossenen bzw. von der Empfängereinheit 14 empfangenen Artikel angeordnet. Die Messmittel 28 sind in einer bevorzugten Ausführungsform als Lichtschranke zum besonders einfachen Zählen ausgebildet. Andere Messmittel zum Erfassen der Anzahl der Artikel sind aber ebenfalls einsetzbar. Die Sendereinheit 11 weist für jede Rohrleitung 17 vorzugsweise eine Doppellichtschranke 29 als Messmittel 28 auf, die in Transportrichtung T noch vor dem Rohranschluss 24 innerhalb der Sendereinheit 11 hinter dem Sendermodul 13 angeordnet ist. Die Empfängereinheit 14 weist eine Lichtschranke 30 als Messmittel 28 auf. Die Lichtschranke 30 ist in Transportrichtung T hinter dem Einlaufbogen 25 innerhalb der Empfängereinheit 14 angeordnet. Die verwendeten Lichtschranken sind bevorzugt in einem Bereich innerhalb der Sendereinheit 11 bzw. der Empfängereinheit 14 angeordnet, an dem die Artikel bereits vereinzelt sind, beispielsweise hinter einer Schusstrommel der Sendereinheit 11 bzw. hinter einem Längstransport der Empfängereinheit 14.

In der gezeigten Ausführungsform ist jeder Rohrleitung 17 eingangsseitig und ausgangsseitig ein Entlüftungsmittel 31, 32 zugeordnet. Diese Entlüftungsmittel 31, 32 sind schaltbar zwischen einer offenen Entlüftungsstellung und einer geschlossenen Sperrstellung. Jede Rohrleitung 17 weist eine Anfangsentlüftung durch das Entlüftungsmittel 31 am Anfang der Rohrleitung 17 direkt hinter der Ausschleuseeinheit 22 und eine Endentlüftung durch das Entlüftungsmittel 32 am Ende der Rohrleitung 17 vor der Rückblaseinheit 23 auf. Die Positionen der Entlüftungsmittel 31, 32 können jedoch von der dargestellten Position abweichen und zwischen der Ausschleuseeinheit 22 und der Rückblaseinheit 23 variieren. Auch kann die Anfangsentlüftung innerhalb der Sendereinheit 11 angeordnet sein, wie weiter unten als Ausführungsform beschrieben.

Das Steuermodul 21 zum automatischen Beheben eines Rohrstaus ist in der dargestellten Ausführungsform ein in die Speichereinrichtung 12 der Sendereinheit integrierter bzw. eingebetteter Programmbaustein zum automatischen Steuern mindestens der Entlüftungsmittel 31, 32 sowie der Rückblaseinheit 23 und der Ausschleuseeinheit 22 in Abhängigkeit des jeweiligen Befüllungsgrads und/oder Druckniveaus jeder Rohrleitung 17. Das Steuermodul 21 ist bevorzugt demnach ein reines Software-Modul. Alternativ kann das Steuermodul 21 auch ein reines Hardware-Modul oder ein kombiniertes Software-/Hardware-Modul sein. Das Steuermodul 21 kann auch als eigenständiges, separates Bauelement insbesondere zum Nachrüsten existierender Anordnungen 10 ausgebildet sein. Als Programmbaustein wird eine Programmsteuereinheit beschrieben, die Mittel zum Abarbeiten eines Steuerprogramms umfasst. Dazu sind das Entlüftungsmittel 32, die Rückblaseinheit 23 und eine weitere hinter der Rückblaseinheit 23 angeordnete Lichtschranke 33 sowie die Lichtschranke 30 über die bereits erwähnten Steuerleitungen 27 mit der Steuereinrichtung 15 verbunden, die wiederum über die Kommunikationsverbindung 18 mit der Steuereinrichtung 12 der Sendereinheit 11 verbunden ist. Das Entlüftungsmittel 31, die Ausschleuseeinheit 22 und eine weitere Lichtschranke 34, die zwischen der Ausschleuseeinheit 22 und dem Entlüftungsmittel 31 angeordnet ist, sind über die genannten Steuerleitungen 26 mit der Steuereinrichtung 12 und somit auch mit dem Steuermodul 21 verbunden. Die Ausrichtung der Ausschleuseeinheit 22 kann variieren. In der Figur 1 ist diese vertikal ausgerichtet. Alternativ kann aber auch eine horizontale oder anderweitig geneigte Ausrichtung vorgesehen sein. Mittels der Lichtschranke 34 ist feststellbar, ob beim Rückblasen alle Artikel die Rohrleitung 34 verlassen haben.

Die Anordnung 10 kann auch noch dahingehend weitergebildet sein, dass insbesondere der Sendereinheit 11 eine Visualisierung 35 zum Anzeigen und/oder Bedienen der Anordnung 10 zugeordnet ist. Die Anordnung 10 kann des Weiteren einen Auffangbehälter 36, eine so genannten Schusskiste aufweisen, in der die ausgeschleusten Artikel gesammelt werden. Zur Ermittlung des Druckniveaus innerhalb der Rohrleitung 17 bzw. zwischen der Lichtschranke 29 der Sendeeinheit 11 und der Ausschleuseeinheit 22 ist innerhalb der Sendereinheit 11 mindestens ein Messmittel 38 vorgesehen, das in der gezeigten Ausführungsform ein Druckwächter ist. In Transportrichtung T noch vor dem Druckwächter und vor der Lichtschranke 29 kann optional ein weiteres Entlüftungsmittel 37 als Anfangsentlüftung vorgesehen sein. Für den Fall, dass das Entlüftungsmittel 37 als Anfangsentlüftung vorgesehen ist, kann optional auf das Entlüftungsmittel 31 verzichtet werden. Sowohl das Entlüftungsmittel 37 als auch das Messmittel 38 sowie die Lichtschranke 29 sind über die Steuerleitungen 26 mit der Steuereinrichtung 12 verbunden.

Im Folgenden wird das Verfahrensprinzip anhand der Zeichnung näher erläutert:
Bei dem Verfahren zum Überführen stabförmiger Artikel der Tabak verarbeitenden Industrie werden die stabförmigen Artikel in Transportrichtung T mittels mindestens eines Sendermoduls 13 mindestens einer Sendereinheit 11 über mindestens eine Rohrleitung 17 an mindestens ein Empfängermodul 16 mindestens einer Empfängereinheit 14 gesendet. Dies ist der normale Senderbetrieb. Durch Mittel 19 zum Erkennen und Anzeigen eines Rohrstaus wird der Senderbetrieb überwacht, derart, dass das Aufbauen eines Rohrstaus bzw. der Rohrstau selbst in der oder jeder Rohrleitung 17 erkannt und angezeigt wird. Wenn ein sich anbahnender bzw. bestehender Rohrstau erkannt und angezeigt wird, wird der Betrieb der Sendereinheit 11 unterbrochen und die den Rohrstau verursachenden Artikel werden aus der oder jeder Rohrleitung 17 ausgeblasen.

Dieses Verfahren zeichnet sich erfindungsgemäß dadurch aus, dass das Ausblasen der den Rohrstau verursachenden Artikel mittels des Steuermoduls 21 automatisch erfolgt, und der Betrieb der Sendereinheit 11 nach dem vollständigen Ausblasen aller den Rohrstau verursachender Artikel aus der oder jeder Rohrleitung 17 mittels des Steuermoduls 21 automatisch wieder aufgenommen wird. Mit anderen Worten gewährleistet das Steuermodul 21, dass das Beheben des Rohrstaus ohne Eingriff einer Bedienperson vollautomatisch ausgeführt wird. Durch die frühzeitige Erkennung eines sich anbahnenden Rohrstaus ist der Grad der Rohrverstopfung geringer, so dass sich diese leichter und vor allem automatisch beheben lässt. Außerdem reduziert sich die Anzahl der auszuschleusenden Artikel.

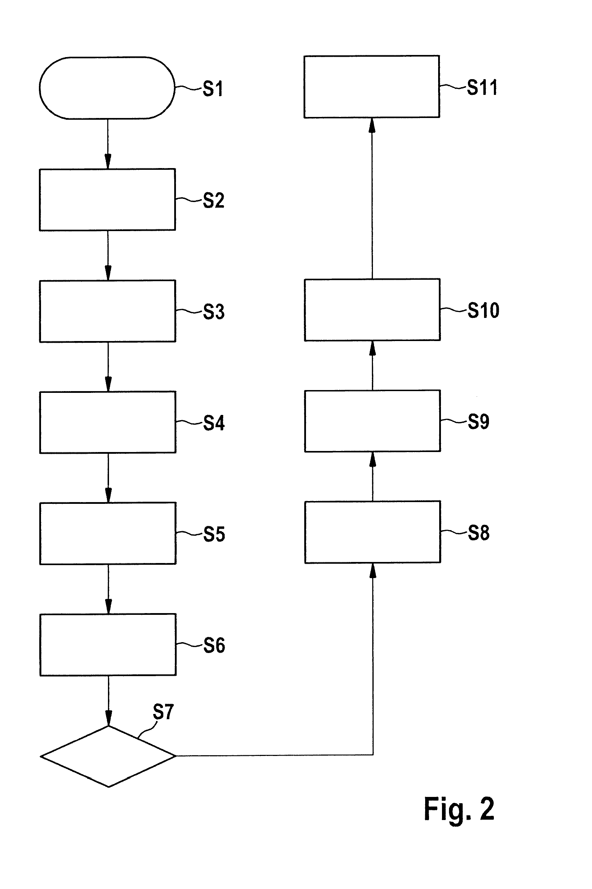

Die weiteren Schritte stellen bevorzugte Optionen dar, die einzeln oder in Kombination miteinander ausgeführt werden können. Am Beispiel der Figur 2 wird der gesamte Rohrstaubehebungsvorgang erläutert. Im normalen Senderbetrieb wird jede Rohrleitung 17 überwacht, indem die Bildung eines Rohrstaus erkannt und angezeigt wird. Die Erkennung des Rohrstaus kann auf unterschiedliche Weise erfolgen. Beispielsweise kann die Anzahl der von der Sendereinheit 11 verschossenen Artikel und die Anzahl der von der Empfängereinheit 14 empfangenen Artikel gezählt werden. Zum Zählen eignen sich z.B. die Lichtschranken 29, 30. Durch eine Differenzbildung ist die Anzahl der Artikel in der Rohrleitung 17 bekannt. In Kenntnis der Länge der stabförmigen Artikel sowie der Länge der Rohrleitung 17 wird der aktuelle Befüllungsgrad der Rohrleitung 17 ermittelt. Dieser aktuelle Befüllungsgrad wird mit einem so genannten Standard-Befüllungsgrad vergleichen, der in Abhängigkeit der Länge der Rohrleitung 17, dem Schießdruck der Sendereinheit 11, sowie anderen Parametern, beispielsweise dem (Filter-)Typ der Artikel und dergleichen, für den normalen Senderbetrieb ermittelt wird. Steigt der aktuelle Befüllungsgrad gegenüber dem Standard-Befüllungsgrad schlagartig an, ist das ein Indikator dafür, dass die Sendereinheit 11 noch Artikel verschießt, an der Empfängereinheit 14 aber keine Artikel mehr ankommen. Folglich baut sich gerade ein Rohrstau auf bzw. ist es zu einem Rohrstau gekommen. Alternativ oder ergänzend kann der Druck innerhalb der Rohrleitung 17 z.B. mittels eines Druckwächters oder dergleichen ermittelt werden. Im Falle eines Rohrstaus direkt hinter der Sendereinheit 11 stauen sich die Artikel bis in die Sendereinheit 11 zurück, bevor die Veränderung des Befüllungsgrads erkannt werden kann. Der Rückstau bis in die Sendereinheit 11 zurück führt zu einem Anstieg des Drucks innerhalb der Rohrleitung 17. Die Informationen zum Rohrstau werden über die Kommunikationsverbindung 18 oder Steuerleitungen 26, 27 an das Steuermodul 21 übermittelt.

Unmittelbar nach der Erkennung eines Rohrstaus wird automatisch der Rohrstaubehebungsvorgang gestartet (siehe Schritt S1). Dann wird die Sendereinheit 11 gestoppt (siehe Schritt S2). Mit anderen Worten wird der Senderbetrieb unterbrochen. Optional kann auch erst die Sendereinheit 11 gestoppt werden, allerdings zunächst bei eingeschalteter Schussluft. Wenn dann immer noch keine Artikel an der Empfängereinheit 14 ankommen, wird der Rohrstaubehebungsvorgang gestartet. Wenn keine Artikel mehr von der Lichtschranke 30 der Empfängereinheit 14 erkannt werden, werden die Entlüftungselemente 31, 32 der Rohrleitung 17, die sich im Senderbetrieb in einer offenen Betriebsstellung befinden, geschlossen bzw. abgesperrt (siehe Schritt S3). Die Steuersignale werden von der Sendereinheit 11 direkt über die Steuerleitung 26 an das Entlüftungsmittel 31 und über die Kommunikationsverbindung 18 an die Empfängereinheit 14 gesendet, die wiederum das Steuersignal über die Steuerleitung 27 an das Entlüftungsmittel 32 leitet. Anschließend schaltet die Sendereinheit 11 die Ausschleuseeinheit 22 über die Steuerleitung 26 aus einer Normalstellung in die Ausschleusestellung (Schritt S4). Sobald die Rohrleitung 17 bzw. deren Entlüftungsmittel 31, 32 gesperrt sind und die Ausschleuseeinheit 22 in der Ausschleusestellung steht, wird die Rückblaseinheit 23 von der Sendereinheit 11 über die Kommunikationsverbindung 18 und die Steuerleitung 27 aktiviert (Schritt S5). Die den Rohrstau verursachenden Artikel werden dann entgegen der Transportrichtung T in Richtung der Sendereinheit 11 aus der Rohrleitung 17 über die Ausschleuseeinheit 22 in einen Auffangbehälter 36 oder dergleichen geblasen (Schritt S6). Wenn die Lichtschranke 34 keinen Artikel mehr erfasst oder eine zuvor aus Länge der Rohrleitung 17 und Länge der Artikel ermittelte Wartezeit abgelaufen ist (Schritt S7), die Rohrleitung 17 also wieder frei von Artikeln ist, kann der normale Senderbetrieb wieder aufgenommen werden. Dazu wird zunächst die Rückblaseinheit 23 abgeschaltet, also in ihre Durchgangsstellung gebracht (Schritt S8). Dann werden die Entlüftungsmittel 31, 32 wieder in ihre ursprüngliche Betriebsstellung geschaltet (Schritt S9) und die Ausschleuseeinheit 22 wird geschlossen (Schritt S10), so dass sie in der Normalstellung steht, in der die Artikel wieder in Transportrichtung T gefördert werden können. Sobald die Schritte S 8 bis S 10 ausgeführt sind, wird der Senderbetrieb automatisch wieder aufgenommen (Schritt S11).

Alternativ können auch einzelne Verfahrensschritte in anderer Reihenfolge ausgeführt werden. Beispielsweise können die Schritte S1 und S2 und/oder S3 und S4 vertauscht werden. Auch die Schritte S8 bis S10 können in unterschiedlicher Reihenfolge ausgeführt werden.

Das zuvor beschriebene Verfahren kann besonders bevorzugt mit der weiter oben beschriebenen Anordnung 10 ausgeführt werden.

## Patentansprüche

1. Anordnung (10) zum Überführen stabförmiger Artikel der Tabak verarbeitenden Industrie, umfassend mindestens eine Sendereinheit (11) mit einer Steuereinrichtung (12) und mindestens einem Sendermodul (13) zum Senden der Artikel in Transportrichtung T, mindestens eine Empfängereinheit (14) mit einer Steuereinrichtung (15) und mindestens einem Empfängermodul (16) zum Empfangen der in Transportrichtung T gesendeten Artikel, mindestens eine jeweils ein Sendermodul (13) mit einem Empfängermodul (16) verbindende Rohrleitung (17) zum Überführen der stabförmigen Artikel von der Sendereinheit (11) an die Empfängereinheit (14), eine die Sendereinheit (11) mit der Empfängereinheit (14) verbindende Kommunikationsverbindung (18), Mittel (19) zum Erkennen und Anzeigen eines Rohrstaus innerhalb jeder Rohrleitung (17), sowie eine Ausblaseinheit (20) zum Ausblasen von den Rohrstau verursachenden Artikeln aus der oder jeder Rohrleitung (17) nach dem Unterbrechen des Betriebs der Sendereinheit (11), **dadurch gekennzeichnet, dass** ein Steuermodul (21) vorgesehen ist, das zum automatischen Beheben eines Rohrstaus durch Ausblasen der Artikel aus jeder einen Rohrstau aufweisenden Rohrleitung (17) und automatischen Wiederaufnehmen des Betriebs der Sendereinheit (11) ausgebildet und eingerichtet ist.

2. Anordnung nach Anspruch 1, **dadurch gekennzeichnet, dass** das Steuermodul (21) der Steuereinrichtung (12) der Sendereinheit (11) zugeordnet ist und die Anordnung (10) im Förderweg der stabförmigen Artikel von der Sendereinheit (11) zur Empfängereinheit (14) eine Rückblaseinheit (23) als Ausblaseinheit (20) zum Ausblasen der Artikel entgegen der Transportrichtung T, die in Transportrichtung T der Artikel hinter der oder jeder Rohrleitung (17) und vor der Empfängereinheit (14) angeordnet ist, und eine Ausschleuseeinheit (22) zum Ausschleusen der Artikel entgegen der Transportrichtung T, die in Transportrichtung T der Artikel hinter der Sendereinheit (11) und vor der oder jeder Rohrleitung (17) angeordnet ist, umfasst, wobei die Rückblaseinheit (23) und die Ausschleuseeinheit (22) über mindestens eine Kommunikationsverbindung (18, 26, 27) mit dem Steuermodul (21) verbunden sind.

3. Anordnung nach Anspruch 1 oder 2, **dadurch gekennzeichnet, dass** das Steuermodul (21) zum automatischen Beheben eines Rohrstaus mit den Steuereinrichtungen (12, 15) der Sendereinheit (11) und der Empfängereinheit (14) der Anordnung (10) in Kommunikationsverbindung steht.

4. Anordnung nach einem der Ansprüche 1 bis 3, **dadurch gekennzeichnet, dass** sowohl im Bereich der Sendereinheit (11) als auch im Bereich der Empfängereinheit (14) Messmittel (28) zum Zählen der von der Sendereinheit (11) abgeschossenen bzw. von der Empfängereinheit (14) empfangenen Artikel angeordnet sind.

5. Anordnung nach einem der Ansprüche 2 bis 4, **dadurch gekennzeichnet, dass** jede Rohrleitung (17) eingangsseitig und ausgangsseitig schaltbare Entlüftungsmittel (31, 32) aufweist.

6. Anordnung nach Anspruch 5, **dadurch gekennzeichnet, dass** das Steuermodul (21) zum automatischen Beheben eines Rohrstaus ein in die Steuereinrichtung (12) der Sendereinheit (11) integrierter Programmbaustein zum automatischen Steuern der Entlüftungsmittel (31, 32) sowie der Rückblaseinheit (23) und der Ausschleuseeinheit (22) in Abhängigkeit des jeweiligen Befüllungsgrads und/oder Druckniveaus jeder Rohrleitung (17) ist.

7. Anordnung nach Anspruch 5 oder 6, **dadurch gekennzeichnet, dass** die Entlüftungsmittel (31, 32) in Transportrichtung T der Artikel an jeder Rohrleitung (17) eingangsseitig hinter der Ausschleuseeinheit (22) und ausgangsseitig vor der Rückblaseinheit (23) angeordnet sind.

8. Anordnung nach einem der Ansprüche 4 bis 7, **dadurch gekennzeichnet, dass** die Messmittel (28) als Lichtschranke (29, 30) ausgebildet sind.

9. Verfahren zum Überführen stabförmiger Artikel der Tabak verarbeitenden Industrie, umfassend die Schritte:
- Senden der stabförmigen Artikel in Transportrichtung T mittels mindestens eines Sendermoduls (13) mindestens einer Sendereinheit (11) über mindestens eine Rohrleitung (17) an mindestens ein Empfängermodul (16) mindestens einer Empfängereinheit (14),
- Erkennen und Anzeigen eines Rohrstaus in der oder jeder Rohrleitung (17) mittels eines Mittels (19) zum Erkennen und Anzeigen eines Rohrstaus, und
- Unterbrechen des Betriebs der Sendereinheit (11) und Ausblasen der den Rohrstau verursachenden Artikel aus der oder jeder Rohrleitung (17),
**dadurch gekennzeichnet, dass** das Ausblasen der den Rohrstau verursachenden Artikel mittels eines Steuermoduls (21) automatisch erfolgt, und der Betrieb der Sendereinheit (11) nach dem vollständigen Ausblasen aller den Rohrstau verursachender Artikel aus der oder jeder Rohrleitung (17) mittels des Steuermoduls (21) automatisch wieder aufgenommen wird.

10. Verfahren nach Anspruch 9, **dadurch gekennzeichnet, dass** mittels des Steuermoduls (21) ein Rohrstau anhand des Befüllungsgrads jeder Rohrleitung (17) über eine Differenzbildung zwischen der Anzahl der von der Sendereinheit (11) abgeschossenen Artikeln und der Anzahl der von der Empfängereinheit (14) empfangenen Artikeln und/oder über eine Druckerhöhung innerhalb der oder jeder Rohrleitung (17) ermittelt, angezeigt und zur Steuerung einer Rückblaseinheit (23) und einer Ausschleuseeinheit (22) verwendet wird.

11. Verfahren nach Anspruch 10, **dadurch gekennzeichnet, dass** die Ausschleuseeinheit (22), die zwischen der Sendereinheit (11) und der oder jeder Rohrleitung (17) angeordnet ist, zum Beheben des Rohrstaus aus einer Normalstellung in eine Ausschleusestellung, und die Rückblaseinheit (23), die zwischen der oder jeder Rohrleitung (17) und der Empfängereinheit (14) angeordnet ist, aus einer Durchgangstellung in einen Betriebszustand geschaltet werden, so dass die stabförmigen Artikel entgegen der Transportrichtung T über die Ausschleuseeinheit (22) aus der oder jeder Rohrleitung (17) ausgeblasen werden.

12. Verfahren nach Anspruch 11, **dadurch gekennzeichnet, dass** die Rückblaseinheit (23) nach dem vollständigen Beheben des Rohrstaus wieder in ihre Durchgangsstellung und die Ausschleuseeinheit (22) wieder in ihre Normalstellung geschaltet werden.

13. Verfahren nach einem der Ansprüche 9 bis 12, **dadurch gekennzeichnet, dass** nach dem Unterbrechen des Betriebs der Sendereinheit (11) Entlüftungsmittel (31, 32), die an jeder Rohrleitung (17) eingangsseitig und ausgangsseitig angeordnet sind, aus einer offenen Betriebsstellung in eine geschlossene Sperrstellung und nach dem vollständigen Ausblasen der Artikel und vor Inbetriebnahme der Sendereinheit (11) wieder zurück in die ursprüngliche Betriebsstellung geschaltet werden.

14. Verfahren nach einem der Ansprüche 9 bis 13, **dadurch gekennzeichnet, dass** es mit einer Anordnung (10) nach einem der Ansprüche 1 bis 8 ausgeführt wird.
